# EUROPÄISCHE PATENTSCHRIFT

(11) **EP 0 425 721 B1**
(45) Veröffentlichungstag und Bekanntmachung des Hinweises auf die Patenterteilung: **21.04.1993**
(21) Anmeldenummer: 89120219.4
(22) Anmeldetag: 31.10.1989
(51) Int. Cl.: B60H 1/24

(54) **Anordnung zur Belüftung des Fahrgastraumes eines Kraftfahrzeuges**
Arrangement for the ventilation of a motor vehicle passenger compartment
Dispositif de ventilation de l'habitacle d'un véhicule automobile

(43) Veröffentlichungstag der Anmeldung: 08.05.1991
(73) Patentinhaber: SIEMENS AKTIENGESELLSCHAFT, 80333 München (DE)
(72) Erfinder: Soethout, Freddie, D-5024 Pulheim 2 (DE)

(56) Entgegenhaltungen:
- EP-A- 0 255 004
- DE-A- 3 309 560
- GB-A- 1 351 613
- GB-A- 2 208 542
- US-A- 2 234 268
- US-A- 3 329 077
- PATENT ABSTRACTS OF JAPAN vol. 10, no. 342 (M-536)(2398) 19 November 1986, & JP-A-61 143211 (NIPPON DENSO CO. LTD.) 30 Juni 1986,
- PATENT ABSTRACTS OF JAPAN vol. 10, no. 122 (M-476)(2179) 07 Mai 1986, & JP-A-60 252019 (NIPPON DENSO K.K.) 12 Dezember 1985,

## Beschreibung

Die Erfindung bezieht sich auf eine Anordnung zur Belüftung des Fahrgastraumes eines Kraftfahrzeuges gemäß Oberbegriff des Anspruchs 1; eine derartige Anordnung ist durch die EP-A2-0 255 004 bekannt.

Bei der bekannten Anordnung zur Belüftung eines Kraftfahrzeuges mit einer Luftströmung von der Frontscheibe durch einen Zwischenraum zwischen dem Fahrzeugdach und einer mit Luftaustrittsöffnungen in den Fahrgastraum versehenen Dachverkleidung ist in einem zentralen Bereich der Frontscheibe ein wandungsloser Luftströmungskanal vorgesehen, dem in der Mitte des Armaturenbretts eine von einer Scheibenheizung getrennte Luftaustrittsdüse für eine gebündelte, turbulenzarme Luftströmung und im Bereich der Frontscheibenoberkante ein in den Zwischenraum führender Einmündungstrichter zugeordnet sind.

Die Dachverkleidung ist zumindest in unmittelbar über den Sitzplätzen des Fahrgastraums liegenden Bereichen mit Austrittsöffnungen versehen, die vorzugsweise mit veränderbarem Luftdurchtrittsquerschnitt derart ausgestaltet sind, daß die aus den Austrittsöffnungen austretende Luftströmung individuell am jeweiligen Fahrzeugplatz eingestellt werden kann. Zur Einstellung der individuellen Luftströmung dienen dabei vorzugsweise Lochschieber und gegebenenfalls Austrittsgitter, mit denen die aus dem Zwischenraum austretende Luftströmung nach Größe und Richtung veränderbar ist. Zur erwünschten Vergleichmäßigung der waagrecht in den Zwischenraum einströmenden Luft sind in diesem gesonderte Ablenk- bzw. Leitelemente erforderlich und können im unmittelbaren Einströmbereich der über den wandungslosen Luftströmungskanal entlang der Frontscheibe eintretenden Luft keine Austrittsöffnungen in der Dachverkleidung vorgesehen werden.

Eine gleichmäßige Luftverteilung in dem Zwischenraum zwischen Fahrzeugdach und Dachverkleidung ohne unerwünschte Wirbelbildung und bei ungehinderter Austrittsmöglichkeit der Belüftung über dem gesamten Fahrgast-Innenraum kann mit geringem konstruktiven Aufwand erfindungsgemäß durch eine durch die Dachverkleidung in den Zwischenraum eintretende und an dem Fahrzeugdach allseitig zurückprallende Luftströmung erreicht werden; zweckmäßigerweise ist eine im wesentlichen senkrecht und mittig zur luftdurchlässigen Dachverkleidung und zum Fahrzeugdach auf dieses aufprallende gebündelte Luftströmung vorgesehen. In konstruktiv einfacher und platzsparender Weise ist eine Wurfdüse für die gebündelte Luftströmung zwischen den Vordersitzen vorgesehen und zweckmäßigerweise auf der an sich vorhandenen Mittelkonsole des Personenwagens angeordnet. Um auch bei größerem, insbesondere bei längerem Fahrgastinnenraum eine gleichmäßige Luftverteilung im Zwischenraum jeweils gewährleisten zu können, ist eine Ausgestaltung der Erfindung durch eine leicht nach schräg hinten und mittig zur luftdurchlässigen Dachverkleidung und zum Fahrzeugdach gerichtete gebündelte Luftströmung gekennzeichnet.

Es hat sich in überraschender Weise herausgestellt, daß die erfindungsgemäß durch die Dachverkleidung in den Zwischenraum eintretende kanallose gebündelte Luftströmung ohne zusätzliche Luftleit- bzw. Luftablenkelemente durch die Prallwirkung des den Zwischenraumnach oben abschließenden Fahrzeugdaches eine nach allen Seiten gleichmäßige turbulenzfreie und ohne Zugerscheinungen entgegen der Einströmrichtung aus den Austrittsöffnungen der Dachverkleidung in den Fahrgastraum zurückströmende Lüftung möglich ist.

Die Erfindung sowie weitere vorteilhafte Ausgestaltungen der Erfindung werden im folgenden anhand eines schematisch dargestellten Ausführungsbeispiels in der Zeichnung näher erläutert; darin zeigen:

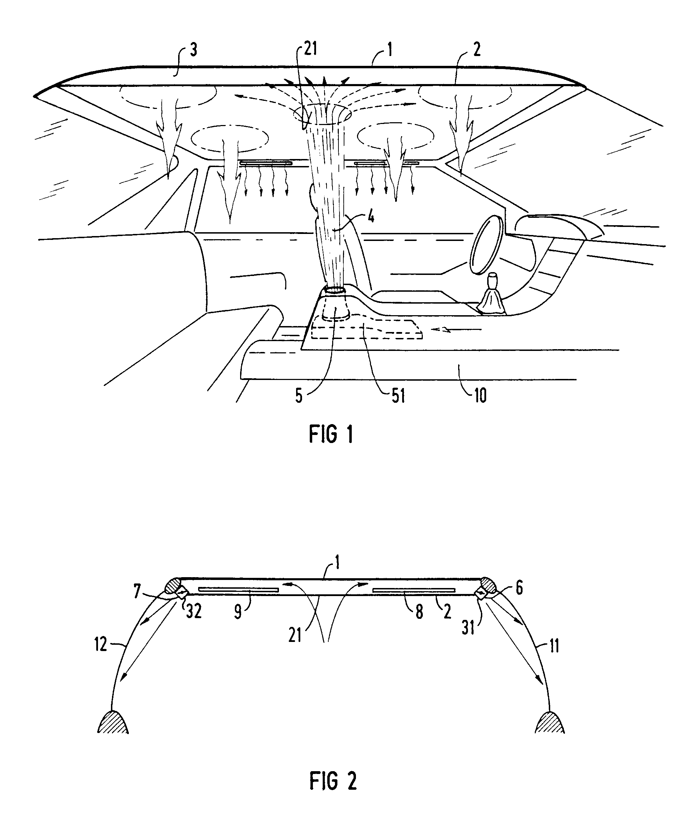

- FIG 1: in perspektivischer Darstellung den Längsschnitt durch einen erfindungsgemäß belüfteten Fahrgastraum eines Personenkraftwagens,
- FIG 2: einen Teilschnitt durch den Fahrgastraum gemäß FIG 1 quer zur Längsachse des Kraftfahrzeuges.

Der Fahrgastraum eines Personenkraftwagens wird nach oben durch ein Fahrzeugdach 1 abgeschlossen. Parallel zum Fahrzeugdach 1 ist in gewissem Abstand, vorzugsweise im Abstand von ca. 30 mm, unter Bildung eines definierten Zwischenraums 3 eine luftdurchlässige Dachverkleidung 2 vorgesehen. Zur Belüftung des Fahrgastraumes dient ein über einen Luftzuführungskanal 51 im Bereich der Mittelkonsole zwischen den Vordersitzen aus einem Heiz- und/oder Klimagerät zugeführter Luftstrom, der als leicht schräg nach hinten geneigt gerichtete und im wesentlichen mittige gebündelte Luftströmung 4 aus einer Wurfdüse 5 in der Mittelkonsole des Fahrgastraumes austritt, und in einem Lufteintrittsbereich 21 erhöhter Durchlässigkeit durch die Dachverkleidung 2 in den Zwischenraum 3 eintritt.

Die über den wandungslosen Kanal eintretende und am Fahrzeugdach zurückprallende Luftströmung verteilt sich gleichmäßig in dem Zwischenraum 3 zwischen dem Fahrzeugdach 1 und der Dachverkleidung 2; anschließend tritt die von der durch das Fahrzeugdach gebildeten Prallfläche zurückgeworfene und dabei verteilte Luft - wie durch entsprechende Luftströmungspfeile im Bereich der Fahrzeugsitze angedeutet - durch entsprechende Austrittsbereiche, z.B. Perforierungen, der Dachverkleidung 2 wieder in den Fahrgastraum ein. Dabei ist nach einer Ausgestaltung der Erfindung vorgesehen, im Bereich der Austrittsbereiche der Dachverkleidung 2 durch zuschaltbare Flächenheizelemente 8,9 - gegebenenfalls individuell pro Fahrzeugsitz regelbar - die aus dem Zwischenraum 3 austretende Luft zu temperieren. In ähnlicher Weise können auch individuell einstellbare Flächenschieber zur Regelung der austretenden Luftmenge vorgesehen werden.

Bei entsprechend hohem Druckaufbau, z.B. durch eine besonders starke gebündelte Luftströmung 4 können nach einer Ausgestaltung der Erfindung zur Belüftung der Kraftfahrzeugfenster 11,12 auch randseitige Luftauslässe 31,32 des Zwischenraums 3 vorgesehen werden, die gegebenenfalls durch Absperrklappen 6,7 verschließbar sind.

## Patentansprüche

1. Anordnung zur Belüftung des Fahrgastraumes eines Kraftfahrzeuges, insbesondere eines Personenkraftwagens, mit zumindest einem wandungslosen Kanal mit aus zumindest einer Wurfdüse (5) austretender gebündelter Luftströmung (4) zu einem Zwischenraum (3) zwischen dem Fahrzeugdach (1) und einer luftdurchlässigen Dachverkleidung (2), aus der die Luftströmung verteilt in den Fahrgastraum wieder austritt, **gekennzeichnet** durch den Eintritt der gebündelten Luftströmung (4) durch die luftdurchlässige Dachverkleidung (2) hindurch in den Zwischenraum (3) und durch einen Austritt in den Fahrgastraum im Sinne eines allseitig verteilten Rückpralls vom Fahrzeugdach (1).

2. Anordnung nach Anspruch 1, **gekennzeichnet** durch eine im wesentlichen senkrecht und mittig zur luftdurchlässigen Dachverkleidung (2) und zum Fahrzeugdach (1) auf dieses aufprallende gebündelte Luftströmung (4).

3. Anordnung nach Anspruch 1, **gekennzeichnet** durch eine leicht nach schräg hinten und mittig zur luftdurchlässigen Dachverkleidung (2) und zum Fahrzeugdach (1) gerichteten gebündelte Luftströmung (4).

4. Anordnung mit zumindest einer aus einer Luftaustrittsdüse (Wurfdüse 5) eines Personenkraftwagens austretenden gebündelten Luftströmung (4) nach zumindest einem der Ansprüche 1-3, **dadurch gekennzeichnet**, daß die für den Austritt der gebündelten Luftströmung (4) vorgesehene Wurfdüse (5) zwischen den Vordersitzen des Personenkraftwagens angeordnet ist.

5. Anordnung nach Anspruch 4, **dadurch gekennzeichnet**, daß die Wurfdüse (5) auf einer mit einem Luftzuleitungskanal (51) versehenen Mittelkonsole (10) zwischen den Vordersitzen des Personenkraftwagens angeordnet ist.

6. Anordnung nach einem der Ansprüche 1-5, **gekennzeichnet** durch einen optisch geschlossenen, jedoch im Sinne einer erhöhten Luftdurchlässigkeit ausgebildeten Luft-Eintrittsbereich (21) der Dachverkleidung (2) oberhalb der auftretenden gebündelten Luftströmung (4).

7. Anordnung nach einem der Ansprüche 1-6, **gekennzeichnet** durch randseitige Luftauslässe (31,32) des Zwischenraums (3) zwischen dem Fahrzeugdach (1) und der Dachverkleidung (2) im Bereich der Kraftfahrzeug-Fenster (11,12).

8. Anordnung nach Anspruch 7, **dadurch gekennzeichnet**, daß die randseitigen Luftauslässe (31,32) durch Absperrklappen (6,7) verschließbar sind.

9. Anordnung nach einem der Ansprüche 1-7, **gekennzeichnet** durch vorzugsweise bereichsweise zuschaltbare Flächenheizelemente (8,9) im Bereich der Dachverkleidung (2).

## Claims

1. Arrangement for ventilating the passenger compartment of a motor vehicle, in particular a passenger car, having at least one wall-less channel with focussed air flow (4), emerging from at least one projection nozzle (5), to an interspace (3) between the vehicle roof (1) and an air-permeable roof lining (2) from which the air flow re-emerges in a manner such that it is distributed into the passenger compartment, characterised by the entry of the focussed air flow (4) through the air-permeable roof lining (2) into the interspace (3) and by an exit into the passenger compartment in the sense of a rebound from the vehicle roof (1) such that it is distributed on all sides.

2. Arrangement according to claim 1, characterised by a focussed air flow (4) which impinges upon the vehicle roof (1) in a manner such that it is substantially perpendicular to and central relative to the air-permeable roof lining (2) and to the vehicle roof (1).

3. Arrangement according to claim 1, characterised by a focussed air flow (4) which is directed slightly obliquely towards the rear and in the centre relative to the air-permeable roof lining (2) and to the vehicle roof (1).

4. Arrangement having at least one focussed air flow (4) which emerges from an air-exit nozzle (projection nozzle 5) of a passenger car according to at least one of the claims 1 - 3, characterised in that the projection nozzle (5) provided for the exit of the focussed air flow (4) is arranged between the front seats of the passenger car.

5. Arrangement according to claim 4, characterised in that the projection nozzle (5) is arranged on a central console (10), provided with an air-supply channel (51), between the front seats of the passenger car.

6. Arrangement according to one of the claims 1 - 5, characterised by an air-entry region (21) of the roof lining (2) above the focussed air flow (4) which occurs, which air-entry region visually appears closed, yet is formed in the sense that it has increased air-permeability.

7. Arrangement according to one of the claims 1 - 6, characterised by edge-side air outlets (31, 32) of the interspace (3) between the vehicle roof (1) and the roof lining (2) in the region of the motor vehicle windows (11, 12).

8. Arrangement according to claim 7, characterised in that the edge-side air outlets (31, 32) can be closed by shut-off flaps (6, 7).

9. Arrangement according to one of the claims 1 - 7, characterised by panel heating elements (8, 9), which can preferably be switched on area by area, in the region of the roof lining (2).

## Revendications

1. Dispositif de ventilation de l'habitacle d'un véhicule automobile, notamment d'une voiture de tourisme, comportant ou moins un canal sans parois, dans lequel circule un courant d'air focalisé (4) qui sort d'au moins une buse d'éjection (5) en direction d'un espace intermédiaire (3) situé entre le toit (1) du véhicule et un habillage du toit (2), perméable à l'air, d'où le courant d'air ressort à nouveau en étant réparti dans l'habitacle, caractérisé par l'entrée du courant d'air focalisé (4) à travers l'habillage du toit (2) perméable à l'air, pour pénétrer dans l'espace intermédiaire (3), et par une sortie dans l'habitacle au sens d'une réflexion, répartie de tous côtés, par le toit (1) du véhicule.

2. Dispositif suivant la revendication 1, caractérisé par un courant d'air focalisé (4) qui rencontre sensiblement perpendiculairement et d'une manière centrée l'habillage (2) du toit, perméable à l'air, et le toit (1) du véhicule.

3. Dispositif suivant la revendication 1, caractérisé par un courant d'air focalisé (4) dirigé légèrement obliquement vers l'arrière et en position centrée vers l'habillage (2) du toit, perméable à l'air, et vers le toit (1) du véhicule.

4. Dispositif comportant au moins un courant d'air focalisé (4), qui sort d'une buse de sortie d'air (buse d'éjection 5) d'une voiture de tourisme, selon au moins l'une des revendications 1-3, caractérisé par le fait que la buse d,éjection (5), qui est prévue pour la sortie du courant d'air focalisé (4), est disposé entre les sièges avant de la voiture de tourisme.

5. Dispositif suivant la revendication 4, caractérisé par le fait que la buse d'éjection (5) est montée sur une console médiane centrale (10) équipée d'un canal d'amenée d'air (51), entre les sièges avant de la voiture de tourisme.

6. Dispositif suivant l'une des revendications 1-5, caractérisé par une zone d'entrée de l'air (21), qui est fermée optiquement, mais est agencée de manière à présenter une perméabilité accrue à l'air, de l'habillage du toit (2) au-dessus du courant d'air focalisé sortant (4).

7. Dispositif suivant l'une des revendications 1-6, caractérisé par des sorties marginales pour l'air (31,32) de l'espace intermédiaire (30) situé entre le toit (1) du véhicule et l'habillage du toit (2) au niveau des fenêtres (11,12) du véhicule.

8. Dispositif suivant la revendication 7, caractérisé par le fait que les sorties marginales pour l'air (31,32) peuvent être fermées par des volets de fermeture (6,7).

9. Dispositif suivant l'une des revendications 1-7, caractérisé par des éléments chauffants étendus (8,9), qui peuvent être branchés de préférence par zones et sont situés au niveau de l'habillage de toit (2).
